# EUROPÄISCHE PATENTSCHRIFT

(11) **EP 0 668 990 B1**
(45) Veröffentlichungstag und Bekanntmachung des Hinweises auf die Patenterteilung: **23.07.1997**
(21) Anmeldenummer: 93923969.5
(22) Anmeldetag: 03.11.1993
(51) Int. Cl.: G01D 5/48, G01B 7/02

(54) **VORRICHTUNG ZUR LAGEMESSUNG ENTLANG EINER VORGEGEBENEN ME STRECKE**
DEVICE FOR POSITIONAL MEASUREMENT ALONG A PREDETERMINED MEASURING PATH
DISPOSITIF POUR LA MESURE D'UNE POSITION LE LONG D'UNE SECTION DE MESURE DETERMINEE

(30) Priorität: 10.11.1992 AT 2211/92
(43) Veröffentlichungstag der Anmeldung: 30.08.1995
(73) Patentinhaber: LEOPOLD, Horst, A-4040 Linz (AT)
(72) Erfinder: LEOPOLD, Horst, A-4040 Linz (AT)
(74) Vertreter: Hübscher, Heiner, Dipl.-Ing.
(86) Internationale Anmeldenummer: AT9300169
(87) Internationale Veröffentlichungsnummer: WO9411709

(56) Entgegenhaltungen:
- US-A- 4 909 112
- US-A- 5 050 135

## Beschreibung

Die Erfindung bezieht sich auf eine Vorrichtung zur Lagemessung entlang einer vorgegebenen Meßstrecke, bestehend aus einem an einen Empfänger für Torsionsschwingungen angeschlossenen, rohrförmigen, ferromagnetischen Wellenleiter, aus einer von einem Stromimpulsgeber gespeisten elektrischen Leitung innerhalb des rohrförmigen Wellenleiters, aus entlang des Wellenleiters auf dessen Außenseite verstellbaren Lagegebern, die zum Wellenleiter radiale, je für sich wahlweise erregbare Elektromagnete aufweisen, und aus einer Auswerteschaltung zur Bestimmung der Meßlage der Lagegeber über die Zeitdifferenz zwischen den gesendeten Stromimpulsen und den empfangenen Torsionsschwingungen.

Bei bekannten Meßvorrichtungen mit ferromagnetischen Wellenleitern, die zu Torsionsschwingungen erregt werden, weisen die Lagegeber permanente Stabmagnete auf, die radial in Trägerringen angeordnet sind, die den Wellenleiter koaxial umschließen, so daß das Magnetfeld des Stromimpulses, der entlang der elektrischen Leitung innerhalb des Wellenleiters verläuft, im Bereich der Lagegeber durch deren permanente Magnetfelder verformt wird. Diese Magnetfeldverformung bedingt ein Torsionsmoment auf den Wellenleiter, was zu einer vom Lagegeber ausgehenden, sich entlang des Wellenleiters fortpflanzenden Torsionsschwingung führt, die über einen geeigneten Empfänger erfaßt wird. Da sowohl die Geschwindigkeit des Stromimpulses entlang der elektrischen Leitung als auch die Fortpflanzungsgeschwindigkeit der Torsionsschwingungen bekannt sind, kann aus der Zeitdifferenz zwischen den gesendeten Stromimpulsen und den empfangenen Torsionsschwingungen, die im Bereich der jeweiligen Lagegeber durch magnetostriktive Kräfte ausgelöst werden, die Lage der Lagegeber auf dem eine Meßstrecke bildenden Wellenleiter mit hoher Genauigkeit bestimmt werden, wobei longitudinale Schwingungen die Messung nicht beeinträchtigen können, weil nur die Torsionsschwingungen zur Lagebestimmung des Wellenleiters ausgewertet werden.

Werden mehrere Lagegeber zur Erfassung mehrerer Positionen entlang der vorgegebenen Meßstrecke eingesetzt, so ergibt sich allerdings die Schwierigkeit, daß mit einem der ringförmigen, den Wellenleiter umschließenden Lagegeber nur ein Meßbereich zwischen den beidseits benachbarten Lagegebern erfaßt werden kann. Dieser Meßbereich verkürzt sich außerdem um einen zwischen unmittelbar benachbarten Lagegebern erforderlichen Schutzabstand zur Vermeidung einer gegenseitigen Beeinflussung der permanenten Magnetfelder der Lagegeber.

Werden die Lagegeber jeweils mit für sich erregbaren Elektromagneten ausgerüstet, die einander paarweise bezüglich des Wellenleiters gegenüberliegen (US-A-4 909 112), so kann zwar die gegenseitige Beeinflussung der Magnetfelder der Lagegeber durch eine zeitlich gestaffelte Erregung der Elektromagnete ausgeschlossen werden, doch bleibt die Beschränkung des über einen Lagegeber erfaßbaren Meßbereiches durch den jeweils benachbarten Lagegeber bestehen.

Der Erfindung liegt somit die Aufgabe zugrunde, eine Vorrichtung zur Lagemessung der eingangs geschilderten Art mit einfachen Mitteln so zu verbessern, daß die Meßbereiche der einzelnen Lagegeber entlang der Meßstrecke unabhängig von der Positionierung benachbarter Lagegeber gewählt werden können.

Die Erfindung löst die gestellte Aufgabe dadurch, daß die Lagegeber über den Umfang des Wellenleiters verteilt angeordnet und entlang von zum Wellenleiter parallelen Führungen voneinander unabhängig über die Meßstrecke verstellbar sind.

Aufgrund der Verteilung der Lagegeber über den Umfang des Wellenleiters können die Lagegeber entlang der ihnen zugeordneten Führungen aneinander vorbei über die gesamte, durch den Wellenleiter gebildete Meßstrecke verstellt werden, so daß durch diese Anordnung jegliche Beschränkung hinsichtlich der Einzelverstellung der Lagegeber enfällt. Der Einsatz von erregbaren Elektromagneten erlaubt eine zeitlich gestaffelte Erregung zumindest der in einem gegenseitigen magnetischen Einflußbereich befindlichen Lagegeber, so daß Meßfehler durch eine gegenseitige Beeinflussung der einzelnen Lagegeber ausgeschlossen werden können. Es ist daher möglich, die Lage von Lagegebern genau zu erfassen, deren Lagen sich lediglich um den kleinsten erfaßbaren Längenmeßwert unterscheiden.

Um konstruktiv einfache Verhältnisse zu schaffen, können die Lagegeber in einem den Wellenleiter koaxial umschließenden, rohrförmigen Gehäuse verschiebbar geführt sein. Da die Auflösung gattungsgemäßer Lagemeßvorrichtungen sehr hoch ist, sollen die Lagegeber möglichst spielfrei geführt werden, damit die Meßergebnisse nicht durch Führungsspiele beeinträchtigt werden können. Zu diesem Zweck können die Führungen aus radial gegen den Wellenleiter vorragenden Trennwänden des rohrförmigen Gehäuses bestehen, zwischen denen die keilförmig ausgebildeten Lagegeber gelagert sind. Die radial vorragenden Trennwände bilden im Querschnitt keilförmige Führungen, die entsprechend keilförmig ausgebildete Lagegeber spielfrei aufnehmen können, insbesondere wenn zwischen den keilförmigen Lagegebern und dem Mantel des rohrförmigen Gehäuses Druckfedern vorgesehen sind, mit deren Hilfe die Lagegeber in den keilförmigen Führungsspalt gedrückt werden.

Eine andere Maßnahme, Führungsspiele zu vermeiden, besteht darin, die Lagegeber gegen die Kraft von Rückstellfedern entlang der Führungen zu verstellen. Die axiale Vorspannung durch die Rückstellfedern schließt vor allem axiale Führungsspiele aus.

Werden die Lagegeber mit Magneten ausgerüstet, die einen Eisenkern aufweisen, was im allgemeinen wegen der besseren Bündelung des Magnetfeldes im Bereich des Wellenleiters der Fall sein wird, so kann die Gefahr auftreten, daß bei einer in axialer Richtung des Wellenleiters einander überlappenden Lage zweier Lagegeber trotz der Erregung nur eines Lagegebers das wirksame Magnetfeld durch den Eisenkern des anderen Lagegebers gestört wird. Um eine solche gegenseitige Beeinflussung mit Sicherheit auszuschließen, können die Lagegeber gegenüber den in Umfangsrichtung des Wellenleiters benachbarten Lagegebern magnetisch abgeschirmt sein. Die magnetischen Abschirmungen schließen eine solche gegenseitige magnetische Beeinflussung der Lagegeber mit Sicherheit aus. Der Vorteil, die Abschirmung an den Lagegebern selbst vorzusehen, ist darin zu sehen, daß die magnetische Abschirmung auf die axiale Erstreckung der Lagegeber beschränkt werden kann, so daß sich über den Stellweg reichende Abschirmwände erübrigen.

In der Zeichnung ist der Erfindungsgegenstand beispielsweise dargestellt. Es zeigen
- Fig. 1: eine erfindungsgemäße Vorrichtung zur Lagemessung entlang einer vorgegebenen Meßstrecke in einem schematischen Axialschnitt und
- Fig. 2: einen achsnormalen Schnitt durch die Vorrichtung nach der Linie II-II der Fig. 1.

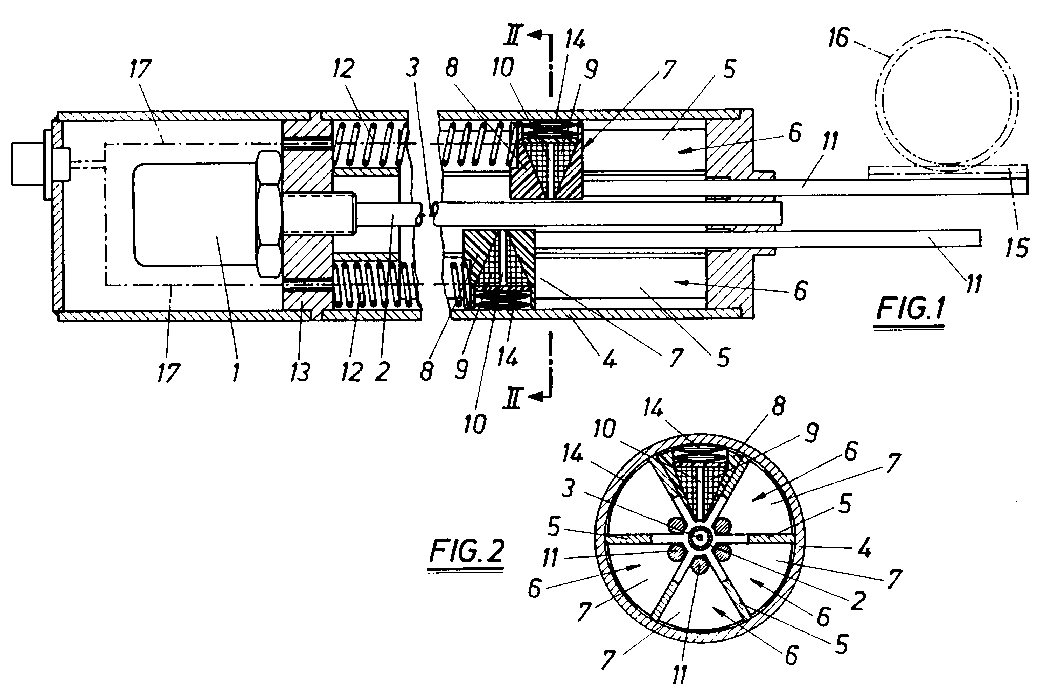

Die dargestellte Vorrichtung zur Lagemessung weist einen Meßkopf 1 auf, an den ein rohrförmiger, ferromagnetischer Wellenleiter 2 angeschlossen ist, der eine elektrische Leitung 3 koaxial umschließt, die an einen im Meßkopf 1 untergebrachten Stromimpulsgeber angeschlossen ist. Der Wellenleiter 2, der üblicherweise in einem Schutzrohr untergebracht ist, das aus Übersichtlichkeitsgründen nicht dargestellt wurde, wird von einem rohrförmigen Gehäuse 4 aufgenommen, das gegen den Wellenleiter 2 vorragende Trennwände 5 aufweist, die paarweise zum Wellenleiter 2 parallele Führungen 6 für entlang des Wellenleiters 2 verschiebbare Lagegeber 7 bilden. Diese Lagegeber 7 weisen einen keilförmigen Trägerkörper 8 für je einen radial zum Wellenleiter 2 ausgerichteten Elektromagnet 9 auf, der mit einem Eisenkern 10 versehen ist. Die keilförmigen Trägerkörper 8 können mit Hilfe von Stelltrieben 11 entlang der Führungen 6 verschoben werden, und zwar gegen die Kraft von Rückstellfedern 12, die sich auf der einen den Meßkopf 1 tragenden Stirnwand 13 des Gehäuses 4 abstützen und als Schraubenfedern ausgebildet sind, die innerhalb der sich zwischen den Trennwänden 5 ergebenden Führungskanäle parallel zum Wellenleiter 2 verlaufen. Da zusätzlich die Trägerkörper 8 der Lagegeber 7 über Federn 14 radial einwärts in die keilförmigen Führungen 6 gedrückt werden, ergibt sich für die Lagegeber 7 eine spielfreie Verstellung über die Stelltriebe 11, die unterschiedlich ausgebildet sein können. In der Fig. 1 ist beispielsweise ein Antrieb über ein in eine Zahnstange 15 eingreifendes Ritzel 16 strichpunktiert angedeutet. Es ist aber selbstverständlich auch jeder andere Antrieb möglich. Es muß lediglich für eine geeignete Antriebsverbindung zwischen dem Konstruktionsteil, dessen Lage bestimmt werden soll, und dem diesem Konstruktionsteil zugeordneten Lagegeber 7 gesorgt werden.

Zur Messung der Lage eines Lagegebers 7 gegenüber dem eine Meßstrecke bildenden Wellenleiter 2 wird der Elektromagnet 9 dieses Lagegebers 7 über eine strichpunktiert angedeutete Erregerleitung 17 erregt und die elektrische Leitung 3 innerhalb des Wellenleiters über den Stromimpulsgeber des Meßkopfes 1 mit einem entsprechenden elektrischen Stromimpuls beaufschlagt. Das magnetische Feld dieses Stromimpulses, der in der elektrischen Leitung 3 den Wellenleiter 2 entlangläuft, wird im Bereich des erregten Lagegebers 7 deformiert, wobei die auftretenden magnetostriktiven Kräfte ein Torsionsmoment auf den Wellenleiter 2 ausüben. Die aufgrund dieses impulsartigen Torsionsmomentes ausgelösten Torsionsschwingungen des Wellenleiters 2 laufen entlang des Wellenleiters 2 zurück zum Meßkopf 1, der einen entsprechenden Empfänger für diese Torsionsschwingungen umfaßt. In einer vorzugsweise ebenfalls innerhalb des Meßkopfes 1 vorgesehenen Auswerteschaltung kann die Zeitdifferenz zwischen den gesendeten Stromimpulsen und den empfangenen Torsionsschwingungen bestimmt und an Hand der bekannten Geschwindigkeit des Stromimpulses und der Fortpflanzungsgeschwindigkeit der Torsionsschwingungen auf die jeweilige Lage des Lagegebers 7 geschlossen werden.

Die Verteilung der Lagegeber 7 über den Umfangs des Wellenleiters 2 erlaubt eine voneinander unaghängige Verstellung der Lagegeber über die gesamte, durch den Wellenleiter 2 gegebene Meßstrecke, weil die Lagegeber ja in axialer Richtung aneinander vorbeibewegt werden können. Die zeitlich gestaffelte Erregung der Elektromagnete 9 der Lagegeber 7 verhindert dabei eine gegenseitige Beeinflussung der Magnetfelder der Lagegeber 7, insbesondere wenn die den Trennwänden 5 zugekehrten Seiten der keilförmigen Tragkörper 8 mit einer magnetischen Abschirmung versehen sind.

Wie dem Ausführungsbeispiel entnommen werden kann, weisen die Magnetspulen eine kegelförmige Form auf, was eine vorteilhafte Raumausnützung erlaubt. Die Ausbildung der Magnetspulen als Kegelspulen ist jedoch keineswegs zwingend erforderlich.

## Patentansprüche

1. Vorrichtung zur Lagemessung entlang einer vorgegebenen Meßstrecke, bestehend aus einem an einen Empfänger für Torsionsschwingungen angeschlossenen, rohrförmigen, ferromagnetischen Wellenleiter (2), aus einer von einem Stromimpulsgeber gespeisten elektrischen Leitung (3) innerhalb des rohrförmigen Wellenleiters (2), aus entlang des Wellenleiters (2) auf dessen Außenseite verstellbaren Lagegebern (7), die zum Wellenleiter (2) radiale, je für sich wahlweise erregbare Elektromagnete (9) aufweisen, und aus einer Auswerteschaltung zur Bestimmung der Meßlage der Lagegeber (7) über die Zeitdifferenz zwischen den gesendeten Stromimpulsen und den empfangenen Torsionsschwingungen, dadurch gekennzeichnet, daß die Lagegeber (7) über den Umfang des Wellenleiters (2) verteilt angeordnet und entlang von zum Wellenleiter (2) parallelen Führungen (6) voneinander unabhängig über die Meßstrecke verstellbar sind.

2. Vorrichtung nach Anspruch 1, dadurch gekennzeichnet, daß die Lagegeber (7) in einem den Wellenleiter (2) koaxial umschließenden, rohrförmigen Gehäuse (4) verschiebbar geführt sind.

3. Vorrichtung nach den Ansprüchen 1 und 2, dadurch gekennzeichnet, daß die Führungen (6) aus radial gegen den Wellenleiter (2) vorragenden Trennwänden (5) des rohrförmigen Gehäuses (4) bestehen, zwischen denen die keilförmig ausgebildeten Lagegeber (7) gelagert sind.

4. Vorrichtung nach Anspruch 3, dadurch gekennzeichnet, daß zwischen den keilförmigen Lagegebern (7) und dem Mantel des rohrförmigen Gehäuses (4) Druckfedern (14) vorgesehen sind.

5. Vorrichtung nach einem der Ansprüche 1 bis 4, dadurch gekennzeichnet, daß die Lagegeber (7) gegen die Kraft von Rückstellfedern (12) entlang der Führungen (6) verstellbar sind.

6. Vorrichtung nach einem der Ansprüche 1 bis 5, dadurch gekennzeichnet, daß die Lagegeber (7) gegenüber den in Umfangsrichtung des Wellenleiters (2) verteilten Lagegebern magnetisch abgeschirmt sind.

## Claims

1. Apparatus for measuring position along a predetermined measuring zone, consisting of a tubular ferromagnetic waveguide (2) connected to a receiver for torsional oscillations, an electric cable (3) inside the tubular waveguide (2) and fed by a current pulse transmitter, position sensors (7) movable along the waveguide (2) on the outside thereof and having individually selectively actuatable electromagnets (9) disposed radially relative to the waveguide (2), and an evaluating circuit for determining the measurement position of the position sensors (7) by way of the time difference between the transmitted current pulses and the received torsional oscillations, characterised in that the position sensors (7) are distributed over the periphery of the waveguide (2) and are movable over the measuring zone independently of one another along guides (6) parallel to the waveguide (2).

2. Apparatus according to claim 1, characterised in that the position sensors (7) are guided for displacement in a tubular housing (4) coaxially surrounding the waveguide (2).

3. Apparatus according to claims 1 and 2, characterised in that the guides (6) consist of partitions (5) of the tubular housing (4) which project radially against the waveguide (2) and between which the wedge-shaped position sensors (7) are mounted.

4. Apparatus according to claim 3, characterised in that compression springs (14) are disposed between the wedge-shaped position sensors (7) and the jacket of the tubular housing (4).

5. Apparatus according to any one of claims 1 to 4, characterised in that the position sensors (7) are movable along the guides (6) against the force of return springs (12).

6. Apparatus according to any one of claims 1 to 5, characterised in that the position sensors (7) are magnetically shielded from the position sensors, which are distributed in the peripheral direction of the waveguide (2) .

## Revendications

1. Dispositif de mesure d'une position, le long d'une section de mesure prédéterminée, constitué d'un guide d'ondes (2) ferromagnétique à forme tubulaire raccordé à un récepteur de vibrations de torsion, d'une ligne électrique (3) alimentée par un transducteur d'impulsions électrique, installé à l'intérieur du guide d'ondes (2) tubulaire, de transducteurs de position (7), réglables le long du guide d'ondes (2), sur sa face extérieure, et présentant des électro-aimants (9) placés radialement par rapport au guide d'ondes (2) et pouvant être excités chacun à volonté, et d'un circuit d'évaluation, conçu pour déterminer la position de mesure des transducteurs de position (7), par l'intermédiaire de la différence de temps entre les impulsions de courant émises et les vibrations de torsion captées, caractérisé en ce que les transducteurs de position (7) sont disposés de façon répartie sur la périphérie du guide d'ondes (2) et sont réglables indépendamment les uns des autres sur la distance de mesure, le long de guidages (6) parallèles au guide d'ondes (2).

2. Dispositif selon la revendication 1, caractérisé en ce que les transducteurs de position (7) sont guidés de façon déplaçable dans un boîtier (4) tubulaire, entourant coaxialement le guide d'ondes (2).

3. Dispositif selon les revendications 1 et 2, caractérisé en ce que les guidages (6) sont constitués de parois de séparation (5), faisant saillie radialement en direction du guide d'ondes (2), du boîtier tubulaire (4), paroi entre lesquelles les transducteurs de position (7), réalisés en forme de coins, sont montés.

4. Dispositif selon la revendication 3, caractérisé en ce que des ressorts de compression (14) sont prévus entre les transducteurs de position (7) en forme de coins et l'enveloppe du boîtier tubulaire (4).

5. Dispositif selon l'une des revendications 1 à 4, caractérisé en ce que les transducteurs de position (7) sont réglables le long des guidages (6) à l'encontre de la force exercée par des ressorts de rappel (12).

6. Dispositif selon l'une des revendications 1 à 5, caractérisé en ce que les transducteurs de position (7) sont isolés magnétiquement par rapport au transducteurs de position répartis dans la direction périphérique du guide d'ondes (2) .
